(19) Europäisches Patentamt
European Patent Office
Office européen des brevets

(11) **EP 4 042 098 B1**

(12) **FASCICULE DE BREVET EUROPEEN**

(45) Date de publication et mention
de la délivrance du brevet:
**28.08.2024 Bulletin 2024/35**

(21) Numéro de dépôt: **20780605.0**

(22) Date de dépôt: **21.09.2020**

(51) Classification Internationale des Brevets (IPC):
**G01B 9/02001** *(2022.01)* **G01B 9/02015** *(2022.01)*
**G01B 9/0209** *(2022.01)* **G01B 11/24** *(2006.01)*
**G01H 9/00** *(2006.01)* **G03H 1/04** *(2006.01)*
**G03H 1/08** *(2006.01)*

(52) Classification Coopérative des Brevets (CPC):
**G01B 9/0203; G01B 9/02007; G01B 9/02032;
G01B 9/0209; G01B 11/2441; G01H 9/00;
G03H 1/0443;** G01B 2290/70; G03H 1/0866;
G03H 2001/0033

(86) Numéro de dépôt international:
**PCT/EP2020/076289**

(87) Numéro de publication internationale:
**WO 2021/069199 (15.04.2021 Gazette 2021/15)**

(54) **DISPOSITIF ET PROCEDE DE MESURES D'IMAGERIE ET D'INTERFEROMETRIE**

VORRICHTUNG UND VERFAHREN ZUR BILDMESSUNG UND INTERFEROMETRIE

DEVICE AND METHOD FOR IMAGING AND INTERFEROMETRY MEASUREMENTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.10.2019 FR 1911062**

(43) Date de publication de la demande:
**17.08.2022 Bulletin 2022/33**

(73) Titulaire: **Fogale Nanotech
30900 Nimes (FR)**

(72) Inventeurs:
• **COURTEVILLE, Alain
30111 CONGENIES (FR)**
• **FRESQUET, Gilles
30190 GARRIGUES SAINTE EULALIE (FR)**

(74) Mandataire: **IPAZ
Bâtiment Platon
Parc Les Algorithmes
91190 Saint-Aubin (FR)**

• **CHRISTIAN REMBE ET AL: "Measurement
System for Full Three-Dimensional Motion
Characterization of MEMS", JOURNAL OF
MICROELECTROMECHANICAL SYSTEMS, IEEE
SERVICE CENTER, US, vol. 11, no. 5, October
2002 (2002-10-01), XP011064796, ISSN:
1057-7157**
• **FRÉDÉRIC MONTFORT ET AL: "Digital
Holography Microscopy (DHM) operating in
pulsed stroboscopic mode: a versatile metrology
instrument for micro and nano technology",
PROC. OF SPIE, vol. 6716, 671605, 10 October
2007 (2007-10-10), XP040245645, DOI:
10.1117/12.754176**
• **SYLVAIN PETITGRAND ET AL: "Simultaneous
mapping of out-of-plane and in-plane vibrations
of MEMS with (sub)nanometer resolution;
Mapping out-of-plane and in-plane vibrations of
MEMS", JOURNAL OF MICROMECHANICS &
MICROENGINEERING, INSTITUTE OF PHYSICS
PUBLISHING, BRISTOL, GB, vol. 14, no. 9, 20
August 2004 (2004-08-20), pages S97 - S101,
XP020069770, ISSN: 0960-1317, DOI:
10.1088/0960-1317/14/9/017**

(56) Documents cités:
EP-A1- 1 705 456     EP-A1- 2 463 616
US-A1- 2014 226 150

EP 4 042 098 B1

**Description**

**Domaine technique**

La présente invention concerne un dispositif pour effectuer des mesures d'imagerie et d'interférométrie plein champ combinées d'un objet. Elle concerne également un procédé de mesures d'imagerie et d'interférométrie combinées.
Le domaine de l'invention est, de manière non limitative, celui des systèmes optiques interférométriques plein champ pour les mesures de formes et de surfaces d'objets.

**Etat de la technique**

On connaît différents types de capteurs interférométriques en plein champ pour mesurer des formes de surfaces ou des couches sur des objets.
Ce type de capteurs mettent en oeuvre un faisceau optique de mesure qui interagit avec l'objet et un faisceau optique de référence qui sont recombinés sur un capteur tel qu'une caméra pour produire des signaux d'interférences. Ils sont dits « en plein champ » lorsque l'objet est imagé sur la caméra selon un champ de vue. Le traitement des signaux d'interférences permet de reconstruire un profil de phase ou une forme de l'objet selon le champ de vue. Les images obtenues sur la caméra dans ces conditions sont un mélange d'image de l'objet et de franges d'interférences.
Il est parfois désirable d'obtenir, parallèlement aux signaux d'interférence, une image de bonne qualité de l'objet, c'est-à-dire sans les franges d'interférence.
Un exemple d'un dispositif interférométrique plein champ pour faire des mesures de forme de surface est décrit dans le document US 2014/0226150. Ce dispositif comprend également une source de lumière externe pour illuminer l'échantillon de sorte à acquérir des images dans franges d'interférences. Toutefois ces images sont nécessairement acquises en champ noir, avec un éclairage non-spéculaire.
Un autre exemple d'un dispositif interférométrique plein champ pour faire des mesures de forme de surface est décrit dans le document US 9,719,777 B1. Ce dispositif met en oeuvre une modulation du chemin optique pour brouiller les franges d'interférence ou positionner l'interféromètre hors de la zone de cohérence de la source (qui est dans ce cas à spectre large), de sorte à permettre l'acquisition d'images sans franges d'interférence. Toutefois dans ce cas il y a toujours de la lumière qui revient du bras de référence de l'interféromètre sur la caméra, qui dégrade la qualité des images acquises.
Un autre exemple d'un dispositif interférométrique plein champ pour faire des mesures de forme de surface est décrit dans le document EP 1705456 A1.

**Exposé de l'invention**

Un but de la présente invention est de pallier les inconvénients des dispositifs et procédés de l'art antérieur.
Il est notamment un but de l'invention de proposer un dispositif et un procédé permettant l'acquisition d'images et de signaux interférométriques d'un objet.
Un autre but de l'invention est de proposer un dispositif et un procédé permettant l'acquisition d'images et de signaux interférométriques sur un objet, dans des conditions optimales, aussi bien pour l'imagerie que pour les signaux interférométriques.
Il est encore un but de la présente invention de proposer un dispositif et un procédé permettant l'acquisition d'images et de signaux interférométriques sur un objet, dans des conditions d'illumination et d'imageries similaires dans les deux modes.
Au moins un de ces buts est atteint avec un dispositif de mesure d'une surface d'un objet, le dispositif comprenant :

- au moins une source de lumière ;
- un capteur optique ou une pluralité de capteurs optiques ; et
- un dispositif interférométrique ayant un bras de mesure et un bras de référence, le bras de mesure étant configuré pour diriger la lumière issue de l'au moins une source de lumière vers la surface à mesurer de l'objet au travers d'une optique de focalisation et pour diriger la lumière issue de la surface à mesurer vers le capteur optique ou les capteurs optiques.

Le dispositif de mesure est configuré, selon une première configuration, dite d'interférométrie, pour illuminer le bras de référence et le bras de mesure avec l'au moins une source de lumière et pour diriger la lumière issue du bras de mesure et du bras de référence vers un premier capteur optique parmi les capteurs optiques de sorte à former un signal d'interférence.

Le dispositif de mesure est configuré, selon une deuxième configuration, dite d'imagerie, pour illuminer au moins le bras de mesure et pour diriger la lumière issue du bras de mesure uniquement vers un capteur optique parmi les capteurs optiques de sorte à former une image de la surface de l'objet.

Le dispositif comprend en outre des moyens de détermination d'une position de la surface à mesurer relativement à un plan objet conjugué du premier capteur optique à partir d'une mesure de ladite surface selon la configuration d'imagerie, et des moyens numériques de traitement configurés pour utiliser ladite position de la surface à mesurer pour corriger des effets de propagation de la lumière entre le plan conjugué du premier capteur optique et ladite surface pour produire, à partir du signal d'interférence, une information sur la surface de l'objet.

Dans le cadre de la présente invention, un « objet » peut désigner tout type d'objet, notamment mécanique, électronique ou optique. Il peut ainsi par exemple désigner, de manière non-limitative, une lentille, une lame ou un assemblage de lentilles et/ou d'autres composants optiques tel qu'un objectif, un élément ou un circuit micro-électronique, un microsystème MEMS (en anglais, *micro-electromechanical system*) ou MOEMS (en anglais, *micro-opto-electromechanical system*). Les mesures permettent de déterminer, par exemple, des formes, des topologies ou des mouvements, tels que des vibrations, d'une surface de l'objet. La surface à mesurer peut être une surface extérieure de l'objet, ou une surface « enterrée », se trouvant entre d'autres surfaces de l'objet. Cette surface peut être également une interface entre deux couches ou deux structures de l'objet.

Les mesures sont effectuées par un dispositif pouvant fonctionner dans une configuration d'interférométrie et dans une configuration d'imagerie.

Dans la configuration d'interférométrie, un signal d'interférence est détecté entre un faisceau de mesure issue de la surface à mesurer et un faisceau de référence. Ce signal d'interférence, en plein champ, est obtenu lorsque les bras de mesure et de référence du dispositif interférométrique sont illuminés par la même source de lumière et configurés de sorte que la différence de trajets optiques des faisceaux respectifs incidents sur le capteur optique est inférieure à la longueur de cohérence de la source.

Dans la configuration d'imagerie, une image de la surface de l'objet est acquise en captant le faisceau de mesure issu de la surface. Les mesures des interférences et d'imagerie sont effectuées selon un champ de vue déterminé par les moyens de mesure du dispositif. Les mesures sont réalisées en plein champ.

Les conditions d'illumination de l'objet et d'acquisition des images et des signaux d'interférence sont similaires. Dans les deux configurations du dispositif de mesure, l'objet est illuminé de la même façon par la lumière du bras de mesure et à travers la même optique de focalisation, en champ clair. De même, dans les deux configurations, le faisceau de mesure issu de la surface de l'objet est acquis à travers cette même optique de focalisation.

Cet agencement du dispositif permet une correspondance optimale entre les signaux d'interférence et les images. Cette correspondance permet leur utilisation combinée pour réaliser une caractérisation plus complète de l'objet D'une manière générale, les images fournies par l'imagerie et les signaux d'interférence fournis par l'interférométrie sont complémentaires.

D'une part, les signaux d'interférence fournissent une mesure de forme ou de hauteur de la surface considérée.

D'autre part, les images fournissent une information dans le plan de la surface de l'objet plus précise et plus complète, monochrome ou couleur, par rapport à l'interférométrie. Même si les signaux d'interférence permettent également d'obtenir des informations d'intensité, ces informations sont fortement dégradées par la présence des artefacts liés aux franges d'interférence et aux conditions de dépliement de phase, en particulier autour de transitions de hauteur de la surface mesurée de l'objet. Les images peuvent être exploitées en mettant en oeuvre des techniques d'analyses d'image pour, par exemple, segmenter des zones, identifier des matériaux ou des éléments de l'image, ou mesurer précisément des dimensions latérales.

En outre, la résolution latérale atteignable peut être très différente suivant le type d'interférométrie mise en oeuvre, et en particulier lorsqu'on utilise une configuration d'interférométrie hors-axe avec des faisceaux de mesure et de référence incidents sur le capteur avec un angle non-nul. Même si cette configuration permet une détection performante dans le domaine de Fourier, elle présente l'inconvénient que, comme l'information est encodée comme une modulation d'un réseau de franges d'interférence dans l'image d'interférence, la résolution latérale dépend de la périodicité de ces franges, et est donc nettement inférieure à la résolution du capteur utilisé.

Selon un mode de réalisation nullement limitatif, le dispositif de mesure selon l'invention comprend en outre des moyens de basculement entre la configuration d'imagerie et la configuration d'interférométrie.

Les moyens de basculement peuvent comprendre un élément de blocage pour bloquer ou empêcher la transmission la lumière dans le bras de référence du dispositif interférométrique. Ainsi, le bras de référence n'est pas illuminé par l'au moins une source de lumière dans la configuration d'imagerie. Cet élément de blocage peut être par exemple un obturateur mécanique ou électrooptique, ou un moyen pour modifier par exemple un alignement d'un élément tel qu'un miroir du bras de référence.

Le dispositif de mesure selon l'invention peut comprendre une première source de lumière agencée pour illuminer le bras de mesure et le bras de référence du dispositif interférométrique.

Selon un mode de réalisation avantageux, le dispositif de mesure selon l'invention peut comprendre deux sources de lumière.

En particulier, il peut comprendre une deuxième source de lumière agencée pour illuminer uniquement le bras de mesure du dispositif interférométrique.

Dans ce cas, la première source de lumière peut être utilisée lorsque le dispositif est dans la configuration d'interférométrie, et la deuxième source de lumière peut être utilisée lorsque le dispositif est dans la configuration d'imagerie.

Avantageusement, les propriétés spectrales et/ou de polarisation de la lumière émise respectivement par la première et la deuxième source de lumière peuvent être différentes, ou varier d'une source de lumière à l'autre.

Ceci permet de différencier la lumière détectée dans la configuration d'interférométrie de celle détectée dans la configuration d'imagerie.

Aussi, dans ce cas, la première source de lumière et la deuxième source de lumière peuvent être utilisées simultanément.

Alternativement, les deux sources de lumière peuvent aussi être utilisées séquentiellement.

Selon un mode de réalisation nullement limitatif, le dispositif de mesure selon l'invention peut comprendre deux capteurs optiques.

Dans ce cas, le premier capteur optique peut être configuré pour détecter la lumière de la première source de lumière (dans la configuration d'interférométrie), et le deuxième capteur optique peut être configuré pour détecter la lumière de la deuxième source de lumière (dans la configuration d'imagerie).

Pour cela, les premiers et deuxièmes capteurs optiques peuvent comprendre, ou être positionnés en aval, de filtres spectraux ou d'éléments polarisants adaptés pour séparer la lumière issue respectivement des premières et deuxièmes sources de lumière.

L'au moins un capteur optique peut comprendre un capteur matriciel (par exemple de type CMOS ou CCD) monochrome ou couleur.

Suivant un mode de réalisation, un capteur couleur peut être utilisé pour acquérir simultanément la lumière d'une première source de lumière dans la configuration d'interférométrie, et d'une deuxième source de lumière dans la configuration d'imagerie. Pour cela on met en oeuvre deux sources de lumière avec des contenus spectraux distincts, et un capteur couleur avec par exemple des filtres spectraux positionnés sur les pixels de sorte à détecter sélectivement sur certains pixels la lumière de la première source et sur d'autres pixels la lumière de la deuxième source. On peut ainsi séparer en sortie du capteur le signal d'interférence et l'image.

Selon un mode de réalisation avantageux, le dispositif de mesure peut comprendre en outre des moyens de positionnement configurés pour positionner relativement un plan objet conjugué de l'au moins un capteur optique au niveau de la surface à mesurer de l'objet.

En effet, il est possible de faire varier la distance de focalisation de la lumière dans le bras de mesure, et/ou la position de la surface à mesurer, afin de positionner la surface de l'objet dans le plan objet conjugué du ou des capteurs optiques. Cela permet notamment d'optimiser les conditions d'imagerie de la surface de l'objet, et/ou la puissance optique recouplée dans le capteur. Par ailleurs, le positionnement de l'objet à mesurer dans le plan objet conjugué du capteur permet une reconstruction plus aisée de la surface à mesurer à partir du signal d'interférence, en évitant notamment des aberrations optiques dues à l'effet de défocalisation.

De manière avantageuse, le dispositif interférométrique peut comprendre un interféromètre en plein champ, configuré pour détecter un signal d'interférence en plein champ dans un champ de vue.

Dans ce cas, la surface à mesurer peut être imagée selon le champ de vue en une seule mesure.

Selon un exemple, le dispositif interférométrique peut comprendre un interféromètre de Michelson, avec des bras de mesure et de référence fonctionnant en réflexion.

Selon un autre exemple, le dispositif interférométrique peut comprendre un interféromètre de Mach-Zehnder, avec des bras de mesure et de référence fonctionnant globalement en transmission.

Suivant un autre aspect de l'invention, il est proposé un procédé de mesure d'une surface d'un objet tel que défini par la revendication 12.

Le procédé selon l'invention permet l'acquisition et le traitement d'images et de signaux d'interférence. Il permet notamment une utilisation combinée des images et des signaux d'interférence obtenus pour en déduire des informations sur l'objet. Il est ainsi possible de combiner des informations issues des mesures d'imagerie et d'interférométrie, pour produire des informations plus complètes sur l'objet.

Selon un mode de réalisation nullement limitatif, les mesures de la surface selon les configurations d'interférométrie et d'imagerie peuvent être réalisées simultanément. Cela peut être notamment réalisé en mettant en oeuvre deux sources de lumière et deux capteurs optiques, ou un capteur optique couleur, comme décrit précédemment.

L'acquisition en parallèle de signaux d'interférence et d'images est notamment bien adaptée à la réalisation de mesures en dynamique, sur un objet en mouvement.

Alternativement, les mesures de la surface selon les configurations d'interférométrie et d'imagerie peuvent être réalisées séquentiellement.

De manière avantageuse, le procédé selon l'invention comprend

- une détermination d'une position de la surface à mesurer relativement à un plan objet conjugué du premier capteur optique à partir d'une mesure de ladite surface selon la configuration d'imagerie ;
- une utilisation de ladite position de la surface à mesurer préalablement déterminée lors d'une mesure de la surface selon la configuration d'interférométrie pour corriger des effets de propagation de la lumière entre e plan conjugué du premier capteur optique et ladite surface.

Il est ainsi possible de positionner précisément la surface à mesurer dans un plan objet conjugué, ou à proximité et à une distance connue d'un tel plan, dans la configuration d'imagerie sans être affecté par les franges d'interférences. On peut ensuite utiliser cette information pour améliorer les conditions et les performances de mesure dans la configuration d'interférométrie.

En effet, pour effectuer des mesures de profil d'une surface d'un objet avec un dispositif interférométrique, il est nécessaire que deux conditions soient satisfaites :

- que la surface soit positionnée dans un plan objet conjugué du capteur ou du détecteur, au sens de l'imagerie, ou à proximité d'un tel plan de sorte qu'il y ait suffisamment de lumière réfléchie par la surface pour permettre une mesure ;
- que la différence de trajet optique entre le faisceau de mesure réfléchi par la surface et le faisceau de référence issu du bras de référence soit inférieure à la longueur de cohérence de la source pour permettre l'apparition de franges d'interférence sur le détecteur.

Ces deux conditions ne sont pas nécessairement satisfaites simultanément, et peuvent dépendre de conditions d'équilibrage de l'interféromètre différentes, en particulier lorsque le faisceau de mesure traverse des couches de matériau ou des surfaces réfractives avant d'atteindre la surface à mesurer. Il peut être alors nécessaire d'ajuster séparément la position du plan objet conjugué et la différence de trajet optique entre les faisceaux de mesure et de référence. Cela a aussi pour conséquence que l'on ne peut pas, dans le cas général, utiliser les franges d'interférence pour déterminer un plan objet conjugué, bien qu'elles impactent fortement la qualité de l'image interférométrique.

En outre, lorsque la surface à mesurer n'est pas positionnée dans le plan objet conjugué du détecteur, les mesures de forme produisent un résultat erroné car elles intègrent les effets de propagation de l'onde lumineuse entre le plan objet conjugué du détecteur et la surface à mesurer. Par exemple, ces effets de propagation peuvent apparaître, pour des mesures de forme de surface, sous la forme d'erreurs d'estimation de la forme globale ou des courbures réelles de ces formes.

Ainsi, une information complémentaire permettant de distinguer les informations de forme réelle de la surface à mesurer et les effets de propagation en tenant compte de la position de cette surface par rapport au plan conjugué du détecteur peut permettre de construire une mesure de la surface dépourvue d'erreurs et/ou de vérifier que cette mesure ne comprend pas d'erreurs dues aux effets de propagation.

Il est donc nécessaire de localiser ce plan conjugué précisément pour, soit positionner la surface de l'objet précisément dans ce plan, soit propager par calcul le champ électromagnétique détecté sur le capteur par interférométrie dans le plan image conjugué de la surface à mesurer. Dans tous les cas, il est important de pouvoir connaître et/ou valider la position de la surface de l'objet par rapport au plan conjugué du détecteur pour pouvoir exploiter une mesure obtenue selon la configuration d'interférométrie, en tenant compte de cette position. On peut ainsi utiliser cette information de position de la surface de l'objet par rapport au plan conjugué du détecteur pour déterminer la forme de la surface avec une plus grande précision.

Grâce au procédé selon l'invention, il est possible d'utiliser l'imagerie, non perturbée par des franges d'interférence, pour déterminer la position pour laquelle le plan objet conjugué du capteur est positionné au niveau de la surface à mesurer, et pour placer le plan objet conjugué du capteur au niveau de cette surface.

Il est alors possible d'optimiser la visibilité des franges d'interférence en variant la différence de trajets optiques entre les faisceaux de mesure et de référence, et d'acquérir et traiter des signaux d'interférence pour en déduire une information, notamment de forme, de la surface de l'objet.

Alternativement, il est possible d'effectuer les mesures en configuration d'interférométrie avec l'objet positionné hors du plan objet conjugué du capteur. Ceci permet d'avoir des variations de phase plus lentes dans le champ de vue, dans le cas de mise en oeuvre d'une technique d'interférométrie hors-axe.

Grâce à la connaissance de la position du plan objet conjugué du capteur, le champ électromagnétique est propagé numériquement sur une distance connue à la position du plan image conjugué de la surface mesurée pour obtenir une information de profil de la surface. Grâce aux images acquises en configuration d'imagerie, la position de ce plan image conjugué de la surface (ou du plan objet conjugué du détecteur) est connue avec précision, même en présence de structures diffractives.

Selon un mode de réalisation nullement limitatif, le traitement du signal d'interférence peut être réalisé par une analyse par profilométrie d'une pluralité d'interférogrammes acquis pour une même surface à mesurer.

La profilométrie est basée sur le traitement de séquences d'interférogrammes acquis pour une pluralité de différences de trajets optiques dans le dispositif interférométrique, et qui constituent le signal d'interférence. Ces séquences peuvent être acquises de différentes manières selon la technique d'analyse mise en oeuvre.

La pluralité d'interférogrammes peut notamment être acquise selon une méthode interférométrique par décalage de phase ou selon une méthode interférométrique par balayage vertical.

Selon un autre mode de réalisation nullement limitatif, le traitement du signal d'interférence peut mettre en oeuvre un procédé de calcul par holographie numérique.

Un signal d'interférence ou interférogramme est enregistré. Puis une méthode d'holographie numérique est utilisée pour reconstruire la surface considérée numériquement, en simulant le processus d'illumination de l'interférogramme sur le détecteur avec une onde de référence numérique. Une telle méthode a l'avantage de ne nécessiter qu'une seule image ou acquisition de signal d'interférence pour calculer la forme d'une surface optique.

Suivant des modes de mise en oeuvre, le procédé selon l'invention peut comprendre une étape d'obtention d'une information sur la surface à mesurer combinant une information d'intensité en niveaux de gris et/ou en couleur obtenue en configuration d'imagerie et une information de forme et/ou de profil obtenue en configuration d'interférométrie.

On peut ainsi obtenir une représentation plus complète de l'objet.

Le procédé selon l'invention peut être mis en oeuvre pour mesurer les formes et/ou les positions de surfaces ou d'interfaces d'un objet tel que décrit précédemment. Il est également particulièrement adapté pour des mesures de vibrométrie afin de connaître les vibrations d'un objet tel qu'un MEMS dans le champ de vue : Les vibrations dans le plan de l'objet peuvent être déduites des images, et les vibrations hors du plan peuvent être déduites des signaux d'interférence.

Suivant des modes de mise en oeuvre, le procédé selon l'invention peut ainsi comprendre une étape d'obtention d'une information de déplacement ou de vibration de la surface à mesurer, comprenant l'obtention d'une information de déplacement ou de vibration dans le plan de cette surface à partir d'images en configuration d'imagerie, et l'obtention d'une information de déplacement ou de vibration hors du plan de cette surface à partir de signaux d'interférence en configuration d'interférométrie.

## Description des figures et modes de réalisation

D'autres avantages et caractéristiques apparaîtront à l'examen de la description détaillée d'exemples nullement limitatifs, et des dessins annexés sur lesquels :

- [Fig.1] La Figure 1 est une représentation schématique d'un dispositif de mesure selon un premier mode de réalisation de la présente invention ;
- [Fig.2] La Figure 2 est une représentation schématique d'un dispositif de mesure selon un deuxième mode de réalisation de la présente invention ;
- [Fig.3] La Figure 3 est une représentation schématique d'un dispositif de mesure selon un troisième mode de réalisation de la présente invention ;
- [Fig.4] La Figure 4 est une représentation schématique d'un dispositif de mesure selon un quatrième mode de réalisation de la présente invention ;
- [Fig.5] La Figure 5 est une représentation schématique d'un dispositif de mesure selon un cinquième mode de réalisation de la présente invention ;
- [Fig.6] La Figure 6 est une représentation schématique d'un dispositif de mesure selon un sixième mode de réalisation de la présente invention ; et
- [Fig.7] La Figure 7 est une représentation schématique d'un exemple de réalisation non limitatif d'un procédé de mesure selon la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures peuvent conserver la même référence.

Le dispositif de mesure selon la présente invention est agencé pour effectuer des mesures d'une surface à mesurer d'un objet, tel qu'un élément optique.

Le dispositif comprend au moins une source lumineuse, au moins un capteur optique ou détecteur et un dispositif interférométrique ayant un bras de mesure et un bras de référence. L'au moins une source est de préférence une source à faible cohérence, dont la lumière est dirigée vers la surface à mesurer au travers d'une optique de focalisation, tel qu'un objectif. La lumière issue de la surface à mesurer est dirigée vers l'au moins un capteur optique.

Le dispositif de mesure peut être configuré selon une configuration d'interférométrie et une configuration d'imagerie.

Dans la configuration d'interférométrie, le bras de référence et le bras de mesure de l'interféromètre sont illuminés, et la lumière issue du bras de mesure et du bras de référence est dirigée vers l'au moins un détecteur pour y produire un signal d'interférence entre le faisceau de mesure réfléchi par la surface à mesurer et le faisceau de référence issu du bras de référence.

Dans la configuration d'imagerie, au moins le bras de mesure de l'interféromètre est illuminé, et la lumière issue du bras de mesure uniquement est dirigée vers l'au moins un capteur optique pour y produire une image de la surface à mesurer.

Le dispositif de mesure comprend en outre des moyens numériques de traitement. Ces moyens de traitement sont configurés pour produire, à partir du signal d'interférence mesuré et de l'image, une information sur la surface à mesurer selon un champ de vue. Ces moyens de traitement comprennent au moins un ordinateur, une unité centrale ou de calcul, un microprocesseur, et/ou des moyens logiciels adaptés.

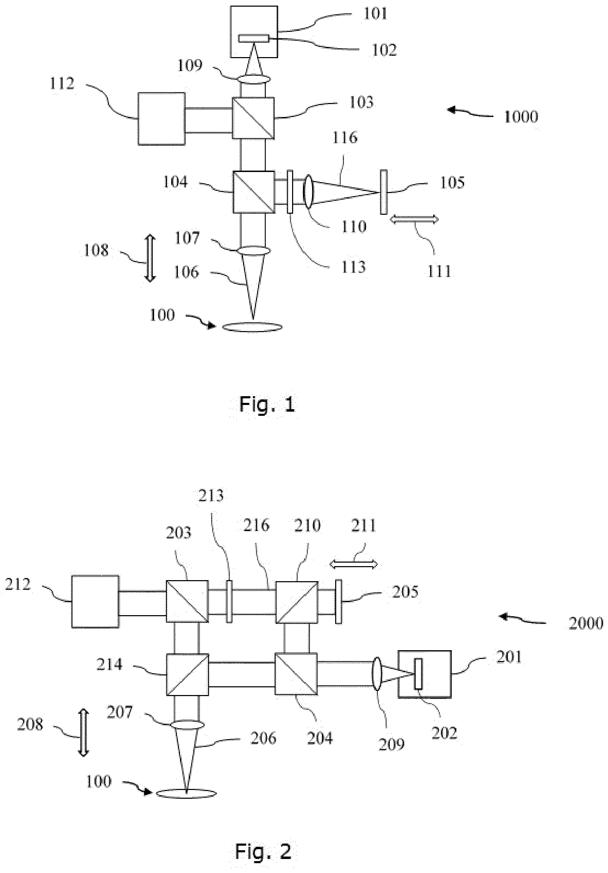

Sur les Figures 1 à 6, des modes de réalisation du dispositif de mesure selon l'invention sont représentés schématiquement. Les moyens de traitement n'y sont pas représentés.

La Figure 1 est une représentation schématique d'un dispositif de mesure selon un premier mode de réalisation de l'invention.

Le dispositif 1000 de mesure comprend un dispositif interférométrique à faible cohérence plein champ de type Michelson ou de Linnik. L'interféromètre est formé par un élément séparateur 104, par exemple sous la forme d'un cube ou d'une lame séparatrice, avec un bras de mesure qui dirige un faisceau de mesure 106 vers une surface à mesurer d'un objet 100, et un bras de référence avec un miroir 105 pour former un faisceau de référence 116.

L'interféromètre est illuminé par une source de lumière 112 par l'intermédiaire d'un élément séparateur d'éclairage 103, par exemple sous la forme d'un cube ou d'une lame séparatrice. Suivant les modes de détection mis en oeuvre, la source 112 peut être à faible cohérence, avec une longueur de cohérence de l'ordre de quelques microns ou quelques dizaines de microns par exemple, ou plus cohérente, avec une longueur de cohérence de quelques centaines de microns ou plus. Elle peut notamment comprendre, par exemple, une diode superluminescente (« *Super Luminescent Diode* » en anglais, SLD), une diode laser, une source de lumière thermique (lampe halogène, etc.) ou une source supercontinuum. Elle peut comprendre également un dispositif de filtrage, par exemple avec un réseau et une fente, ou des filtres interférentiels, pour ajuster la longueur de cohérence en fonction des besoins. Elle peut être agencée pour émettre dans des longueurs d'ondes visible ou proche infrarouge, autour d'une ou de plusieurs longueurs d'ondes.

Bien entendu, les éléments séparateurs 103, 104 peuvent être non polarisants, ou polarisants et associés à des lames quart d'onde pour faire des coupleurs sans pertes.

Les faisceaux de mesure 106 et de référence 116, réfléchis respectivement dans les deux bras de l'interféromètre, sont dirigés par l'intermédiaire de la lame séparatrice d'éclairage 103 vers une caméra 101 avec un capteur ou un détecteur 102 comprenant une matrice de détection, par exemple de type CMOS ou CCD.

Lorsque la différence de trajets optiques entre les faisceaux de mesure et de référence est inférieure à la longueur de cohérence de la source 112, on obtient des interférences sur le détecteur 102.

Le dispositif 1000 selon le mode de réalisation représenté sur la Figure 1 comprend également une lentille ou un objectif de focalisation 107, et une lentille de tube 109, agencées de sorte à définir un plan objet conjugué d'un plan image formé sur le détecteur 102. Le bras de référence comprend en outre un objectif 110 qui définit également, avec la lentille de tube 109, un plan objet de référence conjugué du plan image du détecteur 102.

Le dispositif 1000 est un dispositif imageur plein champ, qui permet d'imager des surfaces ou des interfaces de l'objet à mesurer 100 sur le détecteur 102.

De manière habituelle, le dispositif 1000 comprend des éléments optiques pour focaliser le faisceau d'illumination dans le plan focal arrière de l'objectif de focalisation 107 et de l'objectif 110 du bras de référence. Les faisceaux d'illumination ne sont pas représentés sur la figure pour des raisons de clarté.

Le dispositif 1000 comprend également un moyen de déplacement 108 dont la fonction est de déplacer le plan objet conjugué du plan image formé par le détecteur 102, de sorte par exemple à imager les surface ou interfaces de l'objet sur le détecteur 102. Ce moyen de déplacement 108 peut comprendre un système pour déplacer l'objectif de focalisation 107 ou des lentilles de cet objectif, par exemple avec un dispositif de translation linéaire ou hélicoïdal. Alternativement ou en plus, ce moyen de déplacement 108 peut comprendre un dispositif ou une platine de translation pour déplacer le dispositif 1000 relativement à l'objet à mesurer 100, ou inversement.

Le dispositif 1000 peut comprendre également, de manière optionnelle, un moyen de déplacement 111 pour faire varier la longueur du bras de référence, par exemple sous la forme d'une platine de translation 111 déplaçant le miroir de référence 105. L'objectif 110 du bras de référence peut également être ajustable pour maintenir le miroir de référence 105 dans un plan objet conjugué du plan image formé par le détecteur 102. Ce moyen de déplacement 111 permet d'ajuster la différence relative de trajets optiques entre le bras de mesure et le bras de référence de l'interféromètre, de sorte à ajuster la zone d'apparition des franges d'interférences.

Selon le mode de réalisation représenté sur la Figure 1, le dispositif 1000 comprend également un obturateur 113 permettant d'interrompre le faisceau du bras de référence, de sorte que ce faisceau ne parvienne pas sur le détecteur 102. Cet obturateur peut être de tout type, tel que par exemple un obturateur mécanique (diaphragme), ou électronique (par exemple à base de cristaux liquides). Il peut être également réalisé avec un élément déplaçant le miroir de référence 105, par exemple de sorte à le désaligner.

La Figure 2 est une représentation schématique d'un dispositif de mesure selon un deuxième mode de réalisation de l'invention.

Le dispositif 2000 de mesure comprend un dispositif interférométrique à faible cohérence plein champ de type Mach-Zehnder. L'interféromètre comprend un bras de mesure qui dirige un faisceau de mesure 206 vers la surface à mesurer d'un objet 100, et un bras de référence dans lequel se propage un faisceau de référence 216.

L'interféromètre est illuminé par une source de lumière 212 par l'intermédiaire d'un élément séparateur d'éclairage 203, par exemple sous la forme d'un cube ou d'une lame séparatrice. Suivant les modes de détection mis en oeuvre, la source 212 peut être à faible cohérence, avec une longueur de cohérence de l'ordre de quelques microns ou quelques dizaines de microns par exemple, ou plus cohérente, avec une longueur de cohérence de quelques centaines de microns ou plus. Elle peut notamment comprendre par exemple une diode superluminescente (SLD), une diode laser, une source de lumière thermique (lampe halogène, etc.) ou une source supercontinuum. Elle peut comprendre également un dispositif de filtrage, par exemple avec un réseau et une fente, ou des filtres interférentiels, pour ajuster la longueur de cohérence en fonction des besoins. Elle peut être agencée pour émettre dans des longueurs d'ondes visible ou proche infrarouge, autour d'une ou de plusieurs longueurs d'ondes.

La lumière de la source 212 est séparée en un faisceau de mesure 206 et un faisceau de référence 216 par un premier élément séparateur 203, par exemple sous la forme d'un cube ou d'une lame séparatrice.

L'interféromètre comprend un deuxième élément séparateur 214 dans le bras de mesure, par exemple sous la forme d'un cube ou d'une lame séparatrice, pour diriger le faisceau de mesure 206 vers l'objet à mesurer 100, et transmettre la lumière réfléchie dans cet objet.

Dans le mode de réalisation présenté, le dispositif comprend également, dans le bras de référence, un élément d'ajustage pour diriger et faire varier la longueur du trajet optique du bras de référence. Cet élément peut être réalisé par exemple avec un élément séparateur sous la forme d'un cube ou d'une lame séparatrice 210, et un miroir de référence 205 déplaçable en translation par des moyens de translation 211 tels qu'une platine de translation.

Les faisceaux de mesure 206 et de référence 216 sont ensuite combinée par l'intermédiaire d'un élément séparateur 204, par exemple sous la forme d'un cube ou d'une lame séparatrice, et dirigée vers une caméra 201 avec un capteur ou un détecteur 202 comprenant une matrice de détection, par exemple de type CMOS ou CCD.

Bien entendu, l'interféromètre de Mach-Zehnder peut être réalisé avec des éléments non polarisants, ou polarisants et associés à des lames quart d'onde ou demi-onde pour faire des coupleurs sans pertes. Il peut également être réalisé, au moins partiellement, avec des fibres optiques.

Lorsque la différence de trajets optiques entre les faisceaux de mesure et de référence est inférieure à la longueur de cohérence de la source 212, on obtient des interférences sur le détecteur 202.

Le dispositif comprend également une lentille ou un objectif de focalisation 207, et une lentille de tube 209, agencées de sorte à définir un plan objet conjugué d'un plan image formé sur le détecteur 202.

Le dispositif 2000 est également un dispositif imageur plein champ, qui permet d'imager des surfaces ou des interfaces de l'objet à mesurer 100 sur le détecteur 202.

De manière habituelle, le dispositif 2000 comprend des éléments optiques pour focaliser le faisceau d'illumination dans le plan focal arrière de l'objectif de focalisation 207. Les faisceaux d'illumination ne sont pas représentés sur la figure pour des raisons de clarté.

Le dispositif 2000 comprend également un moyen de déplacement 208 dont la fonction est de déplacer le plan objet conjugué du plan image formé par le détecteur 202, de sorte par exemple à imager les surfaces ou interfaces de l'objet 100 sur le détecteur 202. Ce moyen de déplacement 208 peut comprendre un système pour déplacer l'objectif de focalisation 207 ou des lentilles de cet objectif, par exemple avec un dispositif de translation linéaire ou hélicoïdal. Alternativement ou en plus, ce moyen de déplacement 208 peut comprendre un dispositif ou une platine de translation pour déplacer le dispositif 2000 relativement à l'élément optique 100, ou inversement.

Selon le mode de réalisation représenté sur la Figure 2, le dispositif 2000 comprend également un obturateur 213 permettant d'interrompre le faisceau du bras de référence, de sorte que ce faisceau ne parvienne pas sur le détecteur 202. Cet obturateur peut être de tout type, tel que par exemple un obturateur mécanique (diaphragme) ou électronique (à base de cristaux liquides, ...).

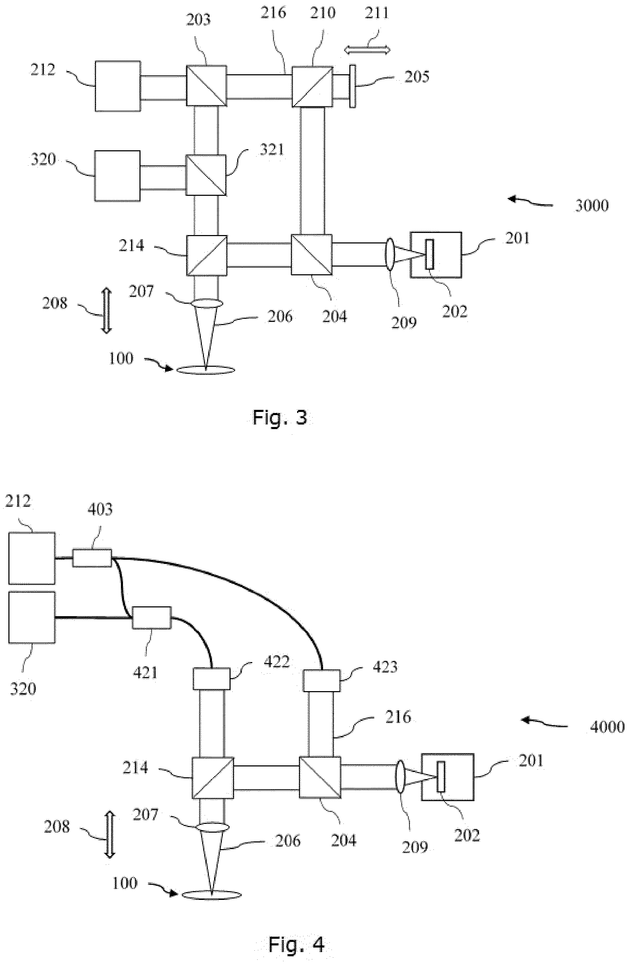

La Figure 3 est une représentation schématique d'un dispositif de mesure selon un troisième mode de réalisation de l'invention.

Le dispositif 3000 de mesure comprend un dispositif interférométrique à faible cohérence plein champ de type Mach-Zehnder.

Le dispositif 3000 diffère du dispositif 2000 représenté sur la Figure 2 en ce qu'il comprend une deuxième source de lumière 320 insérée dans le bras de mesure par l'intermédiaire d'un élément séparateur 321 sous la forme d'un cube ou d'une lame séparatrice. Cette deuxième source de lumière 320 peut être identique à la première source 212, ou différente. Elle peut être notamment à spectre large, dans une bande spectrale similaire ou comprenant le spectre de la première source 212, ou différente du spectre de la première source 212.

Le faisceau de cette deuxième source de lumière 320 est également focalisé dans le plan focal arrière de l'objectif de focalisation 207 (comme pour la première source 212), afin d'illuminer l'objet 100 au travers de cet objectif de focalisation 207 avec un faisceau d'illumination uniforme.

Il est à noter que dans cette configuration, la deuxième source 320 ne génère pas de faisceau de référence 216. Ainsi, de préférence, le dispositif 3000 diffère également du dispositif 2000 en ce qu'il ne comprend pas d'obturateur 213 permettant d'interrompre le faisceau du bras de référence.

Suivant des modes de mise en oeuvre, la première source 212 et la deuxième source 320 peuvent être utilisées alternativement. Lorsque la première source 212 est allumée et la deuxième source 320 est éteinte, le dispositif permet l'acquisition de mesures interférométriques, dans la configuration d'interférométrie. Lorsque la première source 212 est éteinte et la deuxième source 320 est allumée, le dispositif permet l'acquisition de mesures d'imagerie, dans la configuration d'imagerie.

Suivant des modes de mise en oeuvre, la première source 212 et la deuxième source 320 peuvent être utilisées simultanément, avec un détecteur 202 couleur. Pour cela, deux sources de lumière avec des contenus spectraux distincts sont mises en oeuvre, ainsi qu'un détecteur 202 couleur avec par exemple des filtres spectraux positionnés sur les pixels de sorte à détecter sélectivement sur certains pixels la lumière de la première source 212 et sur d'autres pixels la lumière de la deuxième source 320. Il est ainsi possible de séparer en sortie du détecteur les signaux d'interférence et l'image.

Il est à noter que les mesures d'interférométrie et les mesures d'imagerie sont acquises dans les mêmes conditions d'éclairage de l'objet 100 et au travers du même système d'imagerie, pour une correspondance optimale.

La Figure 4 est une représentation schématique d'un dispositif de mesure selon un quatrième mode de réalisation de l'invention.

Le dispositif 4000 de mesure comprend un dispositif interférométrique à faible cohérence plein champ de type Mach-Zehnder.

Le dispositif 4000 diffère du dispositif 3000 représenté sur la Figure 3 en ce que la première source 212 et la deuxième source 320 sont fibrées.

La première source est reliée à un premier coupleur à fibres 403 qui joue le rôle de l'élément séparateur 203 du dispositif 3000, pour générer par l'intermédiaire de deux fibres optiques et deux collimateurs 422 et 423, respectivement, le faisceau de mesure 206 et le faisceau de référence 216.

La deuxième source est insérée dans le bras de mesure par l'intermédiaire d'un deuxième coupleur à fibre 421, qui joue le rôle de l'élément séparateur 321 du dispositif 3000.

De même que pour le dispositif 3000, la première source 212 et la deuxième source 320 peuvent être utilisées alternativement, ou simultanément avec un détecteur 202 couleur.

Suivant une variante du dispositif 4000, la deuxième source peut être insérée dans le bras de mesure par l'intermédiaire d'un élément séparateur 321 en propagation libre, par exemple sous la forme d'un cube ou d'une lame séparatrice, positionné entre le collimateur 422 et l'élément séparateur 214.

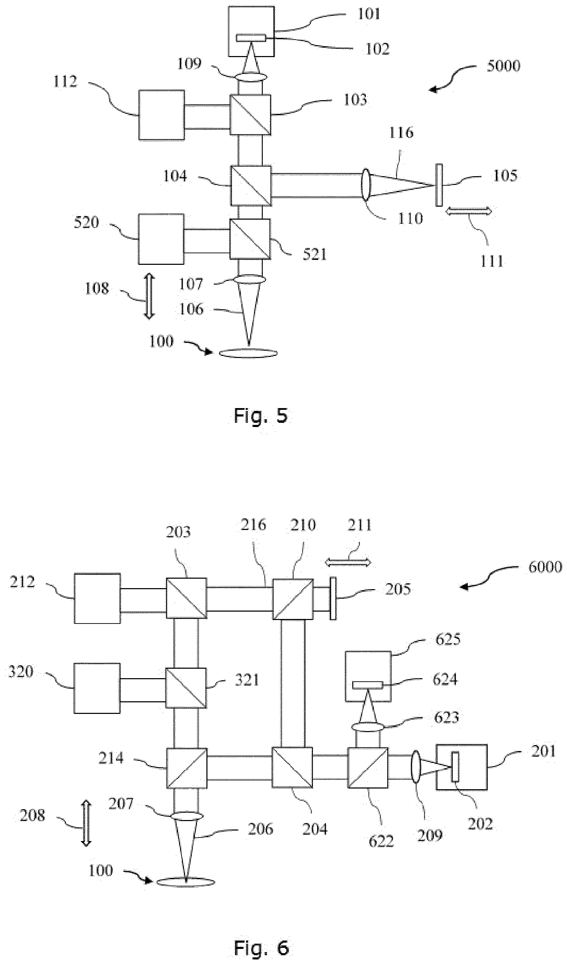

La Figure 5 est une représentation schématique d'un dispositif de mesure selon un cinquième mode de réalisation de l'invention.

Le dispositif 5000 de mesure comprend un dispositif interférométrique à faible cohérence plein champ de type Michelson.

Le dispositif 5000 diffère du dispositif 1000 représenté sur la Figure 1 en ce qu'il comprend une deuxième source de lumière 520 insérée dans le bras de mesure par l'intermédiaire d'un élément séparateur 521, par exemple sous la forme d'un cube ou d'une lame séparatrice. Cet élément séparateur 521 est inséré entre l'élément séparateur 104 de l'interféromètre de Michelson et l'optique de focalisation 107. Dans ce cas, le dispositif 5000 peut ne pas comprendre d'obturateur 113.

De même que pour le dispositif 3000 de la Figure 3, la première source 212 et la deuxième source 520 peuvent être utilisées alternativement, ou simultanément avec un détecteur 102 couleur.

La Figure 6 est une représentation schématique d'un dispositif de mesure selon un sixième mode de réalisation de l'invention.

Le dispositif 6000 de mesure comprend un dispositif interférométrique à faible cohérence plein champ de type Mach-Zehnder.

Le dispositif 6000 diffère du dispositif 3000 représenté sur la Figure 3 en ce qu'il comprend une deuxième caméra 625 avec un détecteur 624 comprenant une matrice de détection, par exemple de type CMOS ou CCD. Le dispositif 6000 comprend également une lentille de tube 623, agencée de sorte à définir avec la lentille de focalisation 207 un plan objet conjugué d'un plan image formé sur le détecteur 624 de la deuxième caméra 625.

Les premières et deuxièmes caméras et leurs lentilles de tube respectives peuvent être agencées de sorte à définir des plans images conjugués d'un même plan objet, au niveau de l'objet 100. En outre, les premières et deuxièmes caméras et leurs lentilles de tube peuvent être identiques pour obtenir une correspondance optimale des images.

Alternativement, les premières et deuxièmes caméras et leurs lentilles de tube respectives peuvent être agencées de sorte à définir des plans images conjugués de plans objets distincts au niveau de l'objet 100. Ces plans objets peuvent être par exemple décalés d'une quantité connue, pour permettre par exemple l'acquisition de signaux interférométriques d'une surface à mesurer hors d'un plan image conjugué de cette surface.

La première et la deuxième caméra sont séparées par un élément séparateur 622. L'élément séparateur et les sources de lumière sont agencés de préférence de sorte que la lumière de chaque source n'atteigne qu'une caméra. Ainsi, par exemple, la lumière de la première source 212 pour le mode interférométrique n'atteint que la première caméra 201, et la lumière de la deuxième source 320 pour le mode d'imagerie n'atteint que la deuxième caméra 625. Pour cela, on peut utiliser des sources de lumière avec des spectres distincts, et un élément séparateur 622 dichroïque. On peut également utiliser des sources de lumière avec des polarisations différentes, et un élément séparateur 622 polarisant, ou apte à séparer des polarisations.

Dans ce mode de réalisation, la première source 212 et la deuxième source 320 peuvent être utilisées simultanément, pour une acquisition simultanée des images et des signaux interférométriques.

Alternativement, l'élément séparateur peut être agencés de sorte que la lumière de chaque source atteigne les deux caméras. Dans ce cas, les deux caméras peuvent être différentes, par exemple couleur et monochrome, pour acquérir des informations différentes.

Suivant des variantes non représentées, les dispositifs 4000 ou 5000 peuvent également comprendre une deuxième caméra 625 et un élément séparateur 622, agencés avec la première caméra de la même manière que pour le dispositif 6000.

Les deux caméras et les deux sources de lumière peuvent être agencées de la même manière et également utilisées de la même manière que ce qui a été décrit pour le dispositif 6000.

Suivant d'autres variantes non représentées, les dispositifs 1000 ou 2000 peuvent également comprendre une deuxième caméra 625 et un élément séparateur 622, agencés avec la première caméra de la même manière que pour le dispositif 6000.

Cela peut permettre en particulier de mettre en oeuvre des caméras différentes (couleur et/ou monochrome) pour mesurer des propriétés différentes des signaux. Cela peut également permettre de mettre en oeuvre simultanément des plans objets conjugués des détecteurs différents.

Le dispositif de mesure selon les modes de réalisation représentés sur les Figures 1 à 6 peut être utilisé pour mettre en oeuvre les étapes d'un procédé de mesure selon l'invention qui seront décrites par la suite.

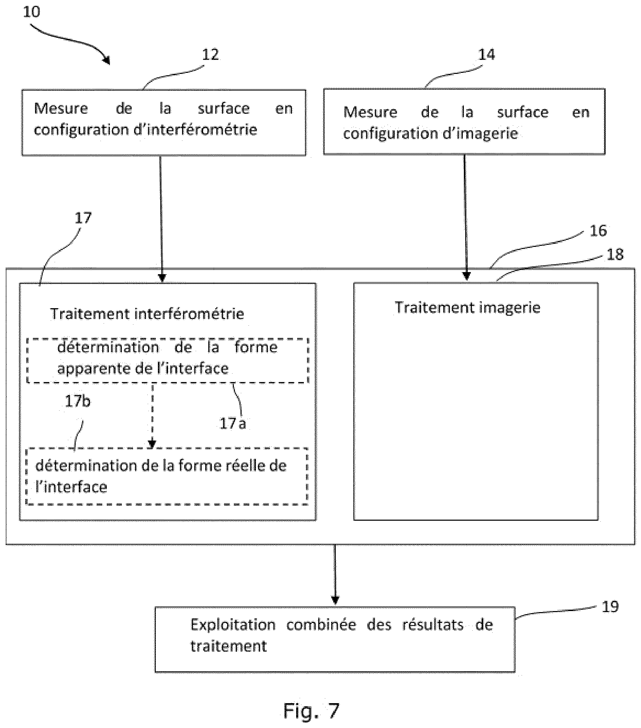

La Figure 7 est une représentation schématique d'un exemple de réalisation non limitatif d'un procédé de mesure selon l'invention.

Le procédé 10, représenté sur la Figure 7, comprend une étape 12 de mesure de la surface à mesurer au moyen du faisceau de mesure 106, 206, dans la configuration d'interférométrie.

Chacun des dispositifs de mesure 1000, 2000, 3000, 4000, 5000, 6000 décrits ci-dessus peut être utilisé pour effectuer la mesure de la surface dans la configuration d'interférométrie. Lorsque les bras de mesure et de référence du dispositif interférométrique plein champ sont illuminés par la même (première) source de lumière 112, 212, et équilibrés de sorte que la différence de trajets optiques des faisceaux de référence et de mesure incidents sur la (première) caméra 101, 201 est inférieure à la longueur de cohérence de la source, on obtient sur le détecteur 102, 202 un signal d'interférence en plein champ.

Le procédé 10 comprend également une étape 14 de mesure de la surface à mesurer au moyen du faisceau de mesure 106, 206, dans la configuration d'imagerie.

L'étape 14 de mesure d'imagerie peut être réalisée séquentiellement ou en parallèle avec l'étape 12 de mesure d'interférométrie.

En particulier, avec les dispositifs 1000, 2000 respectivement représentés sur les Figures 1 et 2, les mesures d'imagerie et d'interférométrie sont réalisées séquentiellement, avec l'obturateur 113, 213 ouvert pour les mesures d'interférométrie et fermé pour les mesures d'imagerie ;

Avec les dispositifs 3000, 4000, 5000 respectivement représentés sur les Figures 3, 4 et 5, les mesures d'imagerie et d'interférométrie peuvent être réalisées séquentiellement, avec les sources de lumières allumées alternativement. Seule la première source 112, 212 est allumée pour les mesures d'interférométrie, tandis que seule la deuxième source 320, 520 est allumée pour les mesures d'imagerie.

Alternativement, avec un détecteur permettant une séparation spectrale des sources, les sources de lumière peuvent être allumées simultanément, et les mesures d'imagerie et d'interférométrie réalisées simultanément.

Avec le dispositif 6000 représenté sur la Figure 6, les mesures d'imagerie et d'interférométrie sont réalisées séquentiellement ou simultanément. Les deux sources de lumières 212, 320 peuvent être allumées alternativement ou simultanément.

L'illumination de la surface à mesurer 100 est réalisée de la même manière que dans la configuration d'interférométrie, au travers de l'objectif de focalisation 207. En outre, à l'exception du mode de réalisation du dispositif 6000 représenté sur la Figure 6, l'acquisition de l'image de l'objet et du signal d'interférence est réalisée au travers du même système d'imagerie et sur la même caméra. Cela permet d'avoir une correspondance optimale entre les images et les signaux d'interférences. Dans le cas du dispositif 6000, le même résultat peut être obtenu par ajustage et calibration des caméras.

Pour obtenir des formes géométriques réelles des surfaces ou interfaces de l'élément optique, les formes optiques de celles-ci doivent être déterminées au préalable, et corrigées des effets de propagation comme décrit ci-dessous.

Lors d'une phase de traitement 16 du procédé 10, le signal d'interférence et l'image obtenus pour une surface à mesurer sont traités numériquement, afin d'en déduire une information sur cette surface. Le signal d'interférence est traité lors d'une étape 17 de traitement interférométrique, et l'image est traitée lors d'une étape 18 de traitement d'imagerie. Les étapes 17, 18 de traitement peuvent être réalisés séquentiellement ou parallèlement.

Lors d'une première étape 17a du traitement interférométrique, une information de forme optique de la surface mesurée est déterminée. Cette forme optique est dite « apparente » car elle est affectée par les éventuelles interfaces et milieux traversés. Elle est déduite des mesures interférométriques.

Différentes méthodes connues peuvent être utilisées pour déterminer des formes optiques et/ou géométriques.

Selon un premier mode de réalisation, des méthodes profilométriques peuvent être utilisées pour réaliser l'étape 17a. La profilométrie est basée sur le traitement de séquences d'interférogrammes.

Dans ce type de méthodes, les faisceaux de mesure et de référence sont ajustés, de préférence, de sorte à être incidents sur le détecteur avec des directions de propagation essentiellement parallèles ou confondues, ou faiblement inclinées, de sorte à produire des interférogrammes en teintes plates ou faiblement modulés.

Un premier exemple d'une telle méthode profilométrique met en oeuvre des algorithmes basés sur l'interférométrie par décalage de phase (« *phase stepping interferometry* » en anglais, PSI).

Pour cela, une pluralité d'interférogrammes (constituant le signal d'interférence) est acquise pour une pluralité de valeurs de différence de trajets optiques ou de phases entre les faisceaux de mesure et de référence, dans la limite de la longueur de cohérence de la source lumineuse.

Ensuite, la phase et éventuellement l'amplitude en tout point du champ de vue 108 du signal d'interférence ainsi constitué sont déterminées en appliquant un algorithme connu, tel que par exemple l'algorithme de Carré, à la succession d'interférogrammes obtenus au point considéré pour les différents déphasages, et en dépliant la phase ainsi obtenue modulo 2 pi.

On obtient ainsi un ensemble de valeurs de différences de phases mesurées $\varphi_m(r_d)$ dans le plan du détecteur (ou plus précisément, de différences de phase entre les faisceaux de mesure et de référence sur le détecteur), $r_d$ étant un vecteur de coordonnées vers des points du plan du détecteur dans un système de référence (X, Y, Z).

On peut alors déterminer la forme optique $L_m(r_d)$ de la surface avec la relation classique :

$$L_m(r_d) = \varphi_m \lambda/4\pi, \qquad (1)$$

avec $\lambda$ la longueur d'onde centrale de la source dans le vide.

La forme géométrique $S_m(r_d)$ peut être déduite de la forme optique par la relation :

$$S_m(r_d) = L_m(r_d)/n, \qquad (2)$$

où $n$ est l'indice de réfraction de groupe du milieu dans lequel le faisceau de mesure est réfléchi.

Un deuxième exemple d'une méthode profilométrique met en oeuvre des algorithmes basés sur l'interférométrie par balayage vertical (« *vertical scan interferometry* » en anglais, VSI).

Pour cela, une source de lumière à faible cohérence ou à spectre large est utilisée.

Une pluralité de signaux interférence est acquise pour une pluralité de retards optiques entre les bras de mesure et de référence de l'interféromètre, dans une gamme de retards optiques s'étendant, de préférence, au-delà de la longueur de cohérence de la source de lumière.

En chaque point $r_d$ du détecteur, le retard optique pour lequel la différence de trajets optiques entre le faisceau de mesure réfléchi sur la surface ou l'interface et le faisceau de référence est nulle est détecté. Pour cela, on peut détecter, par exemple, le maximum d'amplitude de l'enveloppe de l'interférogramme ou la position où la phase de l'interférogramme s'annule. On obtient ainsi directement la forme optique $L_m(r_d)$ de la surface.

Selon un autre mode de réalisation de l'étape 17a, une méthode d'holographie numérique peut être utilisée.

Dans une méthode d'holographie numérique, appelée également « interférométrie hors axe », les faisceaux de mesure et de référence sont ajustés, de préférence, de sorte à être incidents sur le détecteur avec des directions de propagation inclinées, ou formant un angle entre eux.

Pour cela, une source lumineuse cohérente, ou au moins dont la longueur de cohérence est suffisamment grande devant les différences de trajets optiques considérés, est utilisée.

Lorsque le faisceau de mesure réfléchi par une surface ou interface de l'objet et le faisceau de référence ont une différence de trajets optiques ou un retard inférieur à la longueur de cohérence de la source lumineuse, on obtient sur le détecteur un signal d'interférence, ou interférogramme, $I_m(r_d)$ dans lequel l'information de phase est encodée dans un réseau de franges dans la direction d'inclinaison des faisceaux.

L'interférogramme sur le détecteur peut être représenté par l'équation suivante :

$$I_m(r_d) = |E_m(r_d)|^2 + |E_R|^2 + E_R^* E_m(r_d) + E_m^*(r_d)E_R, \qquad (3)$$

avec $E_m$ l'onde électromagnétique en notation complexe telle que réfléchie par la surface ou l'interface et incidente sur le détecteur (faisceau de mesure), $E_R$ l'onde électromagnétique de référence en notation complexe, supposée constante pour la simplicité, et * le conjugué complexe.

Les deux premiers termes correspondent à l'ordre zéro, les troisièmes et quatrièmes termes respectivement aux images réelles et virtuelles.

En choisissant un angle entre les faisceaux de mesure et de référence suffisamment élevé, ces différents termes ou ordres de diffraction sont séparés dans le domaine de Fourier et peuvent donc être filtrés.

Le terme correspondant à l'image réelle peut ainsi être obtenue par filtrage dans le domaine de Fourier par :

$$E_R^* E_m(r_d) = FFT^{-1}\big(FFT\big(I_m(r_d)\big)M\big), \qquad (4)$$

où FFT est la transformée de Fourier rapide et FFT$^{-1}$ son inverse. $M$ est le filtre appliqué dans le domaine fréquentiel pour filtrer le terme correspondant à l'image réelle de sorte à conserver les fréquences spatiales présentes dans l'ouverture numérique de l'objectif de focalisation.

Une fois qu'on a obtenu le terme correspondant à l'image réelle $E_R^*E_m(r_d)$, il est possible de l'illuminer numériquement avec une onde de référence numérique $E_{RD}$ correspondant à l'onde de référence utilisée, pour obtenir l'expression du champ électromagnétique recherché $E_m(r_d)$ :

$$E_m(r_d) = E_{RD} E_R^* E_m(r_d). \qquad (5)$$

Il est à noter qu'en supposant l'onde de référence constante ou uniforme, cette étape peut également être réalisée dans le domaine de Fourier en translatant l'image filtrée en bande de base (autour de la fréquence nulle).

Il est ensuite possible de déterminer, en utilisant la phase $\varphi_m(r_d)$ du champ électromagnétique $E_m(r_d)$, la forme optique $L_m(r_d)$ de la surface considérée avec la relation (1), ainsi que la forme géométrique $S_m(r_d)$ avec la relation (2).

La forme optique ou géométrique obtenue comme décrit précédemment est une forme telle que projetée sur le détecteur. Pour obtenir la forme optique ou géométrique réelle de la surface, il faut encore prendre en compte l'effet du système optique entre la surface et le détecteur, lors d'une étape 17b du procédé 10.

Lorsque la surface se trouve dans un plan objet conjugué du plan image du détecteur et en considérant un système optique parfait, il est possible d'utiliser le grandissement du système d'imagerie qui fait correspondre à un point $r_d$ du détecteur un point $r_i$ dans le plan objet conjugué, $r_i$ étant un vecteur de coordonnées vers des points du plan objet conjugué dans le système de référence (X, Y, Z). On obtient ainsi la forme optique $L_m(r_i)$ ou géométrique $S_m(r_i)$ de la surface corrigée du système optique, avec le bon grandissement.

Selon un mode de réalisation, il est possible de prendre en compte les aberrations du système optique. Cela peut être fait par exemple par calibrage, en effectuant des mesures sur un miroir positionné à la place de l'objet à mesurer 100. On peut ainsi déterminer une forme optique résultant de ces aberrations, qui peut être soustraite de la forme optique mesurée. On peut ainsi également prendre en compte le profil de phase du faisceau de référence sur le détecteur. Ceci permet d'améliorer la précision de la mesure de forme réalisée par le procédé selon l'invention.

Suivant les méthodes d'acquisition et de traitement, et en particulier en mettant en oeuvre une technique d'holographie numérique comme décrit précédemment, il est possible d'obtenir une expression complète (avec l'amplitude et la phase) du champ électromagnétique $E_m(r_d)$ au détecteur. Il est alors possible de propager le champ électromagnétique numériquement, par exemple vers un autre plan de reconstruction, avec des méthodes connues. Des méthodes utilisent notamment l'approximation de Fresnel, telles que par exemple l'approche par transformée de Fourier (Appl. Opt. 38, 6994-7001 (1999)), les spectres angulaires (Opt. Express 13, 9935-9940 (2005)) ou les convolutions (Meas. Sci. Technol. 13, R85-R101 (2002)).

Par exemple, dans le cas où le détecteur n'est pas exactement dans un plan image conjugué du plan objet de la surface à mesurer, on peut déterminer le champ électromagnétique $E_m(r_d)$ dans le plan image en propageant numériquement le champ électromagnétique mesuré au détecteur jusqu'à ce plan.

De même, il est possible de déterminer plus rigoureusement la forme de la surface en propageant le champ électromagnétique à partir du plan du détecteur jusqu'à la surface considérée.

Les algorithmes de profilométrie de type PSI ou holographie numérique ont des étendues de mesure sans ambiguïté limitées à la longueur d'onde. Cette étendue de mesure peut bien entende être étendue selon des techniques bien connues en effectuant des mesures à plusieurs longueurs d'onde.

Lors de l'étape 18 de traitement d'imagerie du procédé 10 selon l'invention, les images peuvent être traitées selon des techniques connues. Elles présentent l'avantage de ne pas être affectées par les signaux d'interférences et permettent d'exploiter au mieux la résolution de la caméra. Il est alors possible de mettre en oeuvre des techniques analyses d'image pour, par exemple, segmenter des zones selon des critères prédéfinis, identifier des matériaux ou des éléments de l'image, ou mesurer précisément des dimensions latérales.

Les résultats des traitements interférométriques et d'imagerie obtenus lors de la phase de traitement 16 représentent des informations complémentaires sur la surface considérée. Leur utilisation combinée permet une caractérisation plus complète de la surface de l'objet.

D'une part, comme détaillé ci-dessus, les signaux d'interférométrie fournissent une mesure de forme ou de hauteur de la surface.

D'autre part, les images fournissent une information dans le plan plus précise et plus complète que les signaux d'interférence.

Il est à noter que les signaux d'interférométrie permettent également d'obtenir des informations d'intensité. Toutefois cette information est fortement dégradée par la présence des artefacts liés aux franges d'interférence et aux conditions de dépliement de phase, en particulier autour des transitions de hauteur de la surface.

En outre, la résolution latérale atteignable peut être très différente suivant le type d'interférométrie mise en oeuvre, et en particulier lorsqu'on utilise une configuration d'interférométrie hors-axe avec des faisceaux de mesure et de référence incidents sur le détecteur avec un angle non-nul. Cette configuration est notamment utilisée en holographie numérique car elle permet une détection performante dans le domaine de Fourier. Mais elle présente l'inconvénient que comme l'information est encodée comme une modulation d'un réseau de franges d'interférence dans l'image d'interférence, la résolution latérale dépend de la périodicité de ces franges, et est donc nettement inférieure à la résolution de la caméra utilisée.

Avantageusement, le dispositif et le procédé selon l'invention permettent une exploitation combinée des mesures d'interférométrie et d'imagerie.

Selon le mode de réalisation représenté sur la Figure 7, le procédé 10 selon l'invention comprend une étape 19 d'obtention d'une information sur la surface à mesurer. Pour réaliser cette étape 19, une information d'intensité en niveaux de gris et/ou en couleur obtenue en configuration d'imagerie et une information de forme et/ou de profil obtenue en configuration d'interférométrie sont combinées.

L'exploitation combinée des signaux interférométriques et images obtenus peut être employée dans des domaines divers.

Selon un premier exemple, le dispositif et le procédé selon l'invention peuvent être mis en oeuvre dans le domaine de la vibrométrie.

Selon cet exemple particulier de mise en oeuvre, le procédé de mesure selon l'invention permet de réaliser des mesures de vibrations d'un objet tel qu'un MEMS ou un élément de MEMS, comme une membrane ou un actuateur en forme de peigne électrostatique.

Le but est de mesurer les vibrations dans le champ de vue, dans le plan (X, Y) et hors du plan (Z). Pour cela, suivant un mode de réalisation préférentiel, le dispositif 6000 avec deux caméras qui permettent des acquisitions simultanées est mis en oeuvre.

Les signaux interférométriques sont acquis dans une configuration d'interférométrie hors-axe, et traités selon des techniques d'holographie numérique comme décrit ci-dessus. Cela permet d'obtenir une mesure complète de forme de la surface de l'objet, pour chaque acquisition et à cadence élevée. La séquence temporelle de ces formes ou profils permet de décrire les déplacements ou vibrations de la surface au moins hors du plan (Z). Pour mesurer des vibrations à hautes fréquences, il est possible d'utiliser un éclairage pulsé ou stroboscopique.

Comme expliqué précédemment, la résolution latérale atteignable dans la configuration interférométrique est limitée, et donc les performances de cette technique pour les mesures dans le plan (X, Y) sont également limitées.

Pour remédier à ce problème, selon l'invention, une acquisition en parallèle d'images avec la deuxième caméra et la deuxième source est effectuée de manière synchrone (pour l'illumination et l'acquisition) avec l'acquisition des signaux interférométriques. Ainsi, par corrélation d'images successives, il est possible de déterminer des déplacements dans le plan (X, Y) avec une grande précision. Comme les acquisitions dans les deux configurations sont synchrones, la vibration ou le déplacement complet du MEMS peuvent être décrits ou suivis efficacement dans le champ de vue, dans le plan (X, Y) et hors du plan (Z).

Le dispositif et le procédé selon l'invention sont mis en oeuvre pour la détermination d'un plan objet conjugué.

En effet, pour pouvoir effectuer des mesures de profil d'une surface ou d'une interface avec un dispositif interférométrique, il est nécessaire que les deux conditions suivantes soient satisfaites.

Premièrement, la surface doit être positionnée dans un plan conjugué du détecteur, au sens de l'imagerie, ou à proximité d'un tel plan de sorte qu'il y ait suffisamment de lumière réfléchie par la surface et donc de la puissance recouplée dans le système d'imagerie pour permettre une mesure.

Deuxièmement, la différence de trajet optique entre le faisceau de mesure réfléchi par la surface et le faisceau de référence doit être inférieure à la longueur de cohérence de la source lumineuse pour permettre l'apparition de franges d'interférence sur le détecteur.

Il est à noter que de manière générale ces deux conditions peuvent ne pas être satisfaites au même endroit ou dans le même plan, en fonction de l'équilibrage de l'interféromètre. Ceci est notamment le cas lorsque le faisceau de mesure traverse des couches de matériau ou des surfaces réfractives (lentilles) avant d'atteindre la surface à mesurer. Il peut être alors nécessaire d'ajuster séparément la position du plan objet conjugué et la différence de trajet optique entre les faisceaux de mesure et de référence. Cela a aussi pour conséquence que dans le cas général, il n'est pas possible d'utiliser les franges d'interférences pour déterminer un plan objet conjugué, bien qu'elles impactent fortement la qualité de l'image interférométrique.

En outre, lorsque la surface à mesurer n'est pas positionnée dans le plan objet conjugué du détecteur, les mesures de forme produisent un résultat erroné car elles intègrent les effets de propagation de l'onde entre le plan objet conjugué du détecteur et la surface. Il est donc nécessaire de localiser ce plan conjugué précisément pour, soit positionner la surface de l'objet précisément dans ce plan, soit propager par calcul le champ électromagnétique détecté sur le détecteur dans la configuration interférométrique dans le plan image conjugué de la surface à mesurer de l'objet.

Le dispositif de mesure selon l'invention est utilisé dans la configuration d'imagerie, afin d'obtenir une image de la surface non perturbée par des franges d'interférence, pour déterminer la position de la surface à mesurer relativement au plan objet conjugué détecteur.

Ceci permet notamment de connaître la position pour laquelle le plan objet conjugué du détecteur est positionné au niveau de la surface à mesurer. On peut déterminer cette position par analyse d'images acquises au cours d'un balayage, en déterminant par exemple l'image dans laquelle les hautes fréquences spatiales sont maximisées.

Une fois que cette position est connue, il est possible, par exemple

- de placer le plan objet conjugué du détecteur au niveau de cette surface,
- éventuellement, d'optimiser la visibilité des franges d'interférence en variant la différence de trajets optiques entre les faisceaux de mesure et de référence, et
- d'acquérir et de traiter les signaux d'interférence pour en déduire une information de forme de la surface.

Suivant une mise en oeuvre alternative, en particulier lorsqu'on utilise une technique d'interférométrie hors-axe avec un traitement par holographie numérique, il peut être préférable d'effectuer les mesures interférométriques avec la surface de l'objet positionnée hors du plan objet conjugué du plan du détecteur, notamment pour avoir des variations de phase plus lentes.

Dans ce cas, le plan objet conjugué du détecteur est placé à une distance connue de la position pour laquelle le plan objet conjugué du détecteur est positionné au niveau de la surface à mesurer. La visibilité des franges d'interférence peut éventuellement être optimisée en variant la différence de trajets optiques entre les faisceaux de mesure et de référence. Ensuite, les signaux d'interférence sont acquis et traités pour en déduire une expression de champ électromagnétique ou de front d'onde au niveau du détecteur. Enfin, ce champ électromagnétique est propagé numériquement à la position du plan image conjugué de la surface mesurée, en utilisant un modèle connu tel que décrit précédemment, pour obtenir l'information de profil de la surface.

Bien sûr, l'invention n'est pas limitée aux exemples qui viennent d'être décrits et de nombreux aménagements peuvent être apportés à ces exemples sans sortir du cadre de l'invention telle que définie par les revendications annexées.

**Revendications**

1. Dispositif (1000, 2000, 3000, 4000, 5000, 6000) de mesure d'une surface d'un objet (100), le dispositif comprenant :

   - au moins une source de lumière (112, 212, 320, 520) ;
   - un capteur optique ou une pluralité de capteurs optiques (102, 202, 624) ; et
   - un dispositif interférométrique ayant un bras de mesure et un bras de référence, le bras de mesure étant configuré pour diriger la lumière issue de l'au moins une source de lumière (112, 212, 320, 520) vers la surface à mesurer de l'objet au travers d'une optique de focalisation (107, 207) et pour diriger la lumière issue de la surface à mesurer vers le capteur optique ou les capteurs optiques (102, 202, 624) ;
   le dispositif de mesure étant configuré, selon une première configuration, dite d'interférométrie, pour illuminer le bras de référence et le bras de mesure avec l'au moins une source de lumière (112, 212, 320, 520) et pour diriger la lumière issue du bras de mesure et du bras de référence vers un premier capteur optique parmi les capteurs optiques (102, 202, 624) de sorte à former un signal d'interférence ;
   le dispositif de mesure étant configuré, selon une deuxième configuration, dite d'imagerie, pour illuminer au moins le bras de mesure et pour diriger la lumière issue du bras de mesure uniquement vers un capteur optique parmi les capteurs optiques (102, 202, 624) de sorte à former une image de la surface à mesurer ;
   le dispositif de mesure comprenant en outre :

      des moyens de détermination d'une position de la surface à mesurer relativement à un plan objet conjugué du premier capteur optique (102, 202, 624) à partir d'une mesure de ladite surface selon la configuration d'imagerie,
      des moyens numériques de traitement configurés pour utiliser ladite position de la surface à mesurer pour corriger des effets de propagation de la lumière entre le plan conjugué du premier capteur optique et ladite surface pour produire, à partir du signal d'interférence, une information sur la surface à mesurer.

2. Dispositif selon la revendication 1, le dispositif comprenant en outre des moyens de basculement entre la configuration d'imagerie et la configuration d'interférométrie.

3. Dispositif selon la revendication 2, **caractérisé en ce que** les moyens de basculement comprennent un élément de blocage (113, 213) pour bloquer la lumière du bras de référence du dispositif interférométrique.

4. Dispositif selon l'une quelconque des revendications précédentes, **caractérisé en ce qu'**il comprend une première source de lumière (112, 212) agencée pour illuminer le bras de mesure et le bras de référence du dispositif interférométrique.

5. Dispositif selon la revendication précédente, **caractérisé en ce qu'**il comprend une deuxième source de lumière (320, 520) agencée pour illuminer uniquement le bras de mesure du dispositif interférométrique.

6. Dispositif selon la revendication précédente, **caractérisé en ce que** les propriétés spectrales et/ou de polarisation de la lumière émise respectivement par la première et la deuxième source de lumière (112, 212, 320, 520) sont différentes.

7. Dispositif selon la revendication précédente, **caractérisé en ce qu'**il comprend deux capteurs optiques (102, 202, 624), le premier étant configuré pour détecter la lumière de la première source de lumière (112, 212) et le deuxième étant configuré pour détecter la lumière de la deuxième source de lumière (320, 520).

8. Dispositif selon l'une quelconque des revendications précédentes, **caractérisé en ce que** l'au moins un capteur optique (102, 202, 624) comprend un capteur matriciel monochrome ou couleur.

9. Dispositif selon l'une quelconque des revendications précédentes, **caractérisé en ce qu'**il comprend en outre des moyens de positionnement configurés pour positionner relativement un plan objet conjugué de l'au moins un capteur optique (102, 202, 624) au niveau de la surface à mesurer.

10. Dispositif selon l'une quelconque des revendications précédentes, **caractérisé en ce que** le dispositif interférométrique comprend un interféromètre de Michelson.

11. Dispositif selon l'une quelconque des revendications précédentes, **caractérisé en ce que** le dispositif interférométrique comprend un interféromètre de Mach-Zehnder.

**12.** Procédé (10) de mesure d'une surface d'un objet (100), le procédé (10) étant mis en oeuvre par un dispositif de mesure (1000, 2000, 3000, 4000, 5000, 6000) comprenant :

- au moins une source de lumière (112, 212, 320, 520) ;
- un capteur optique ou une pluralité de capteurs optiques (102, 202, 624) ;
- un dispositif interférométrique ayant un bras de mesure et un bras de référence, le bras de mesure étant configuré pour diriger la lumière issue de l'au moins une source de lumière (112, 212, 320, 520) vers la surface à mesurer de l'objet au travers d'une optique de focalisation (107, 207) et pour diriger la lumière issue de la surface à mesurer vers le capteur optique ou les capteurs optiques (102, 202, 624) ; ledit procédé comprenant les étapes suivantes :

- mesure (12) de la surface selon une première configuration du dispositif, dite d'interférométrie, par l'éclairage du bras de référence et du bras de mesure avec l'au moins une source de lumière (112, 212, 320, 520) et la détection, par un premier capteur optique parmi les capteurs optiques (102, 202, 624), de la lumière issue du bras de mesure et du bras de référence, de sorte à produire un signal d'interférence ;
- mesure (14) de la surface selon une deuxième configuration du dispositif, dite d'imagerie, par l'éclairage, au moins, du bras de mesure et la détection, par un capteur optique parmi les capteurs optiques (102, 202, 624), de la lumière issue uniquement du bras de mesure, de sorte à former une image de la surface à mesurer ; et
- détermination d'une position de la surface à mesurer relativement à un plan objet conjugué du premier capteur optique (102, 202, 624) à partir d'une mesure de ladite surface selon la configuration d'imagerie ; ledit procédé étant **caractérisé en ce qu'**il comprend en outre l'étape suivante :

- traitement (16, 17, 18) de ladite position de la surface à mesurer pour corriger des effets de propagation de la lumière entre le plan conjugué du premier capteur optique et ladite surface, et du signal d'interférence par des moyens numériques de traitement, de sorte à obtenir une information sur la surface à mesurer.

**13.** Procédé selon la revendication 12, **caractérisé en ce que** le traitement (17) du signal d'interférence est réalisé par une analyse par profilométrie d'une pluralité d'interférogrammes acquis pour une même surface à mesurer.

**14.** Procédé selon la revendication précédente, **caractérisé en ce que** la pluralité d'interférogrammes est acquise selon une méthode interférométrique par décalage de phase, ou selon une méthode interférométrique par balayage vertical.

**15.** Procédé selon la revendication 12, **caractérisé en ce que** le traitement (17) du signal d'interférence met en oeuvre un procédé de calcul par holographie numérique.

**16.** Procédé selon l'une quelconque des revendications 12 à 15, **caractérisé en ce qu'**il comprend une étape (19) d'obtention d'une information sur la surface à mesurer combinant une information d'intensité en niveaux de gris et/ou en couleur obtenue en configuration d'imagerie et une information de forme et/ou de profil obtenue en configuration d'interférométrie.

**17.** Procédé selon l'une quelconque des revendications 12 à 15, **caractérisé en ce qu'**il comprend une étape (19) d'obtention d'une information de déplacement ou de vibration de la surface à mesurer, comprenant l'obtention d'une information de déplacement ou de vibration dans le plan de cette surface à partir d'images en configuration d'imagerie, et l'obtention d'une information de déplacement ou de vibration hors du plan de cette surface à partir de signaux d'interférence en configuration d'interférométrie.

**Patentansprüche**

**1.** Vorrichtung (1000, 2000, 3000, 4000, 5000, 6000) zum Messen einer Oberfläche eines Objekts (100), wobei die Vorrichtung umfasst:

- mindestens eine Lichtquelle (112, 212, 320, 520);

- einen optischen Sensor oder eine Vielzahl von optischen Sensoren (102, 202, 624); und
- eine interferometrische Vorrichtung, die einen Messarm und einen Referenzarm aufweist, wobei der Messarm konfiguriert ist, um das Licht, das von der mindestens einen Lichtquelle (112, 212, 320, 520) abgegeben wird, auf die zu messende Oberfläche des Objekts mittels einer Fokussieroptik (107, 207) zu lenken und um das abgegebene Licht von der zu messenden Oberfläche zu dem optischen Sensor oder den optischen Sensoren (102, 202, 624) zu lenken;

wobei die Messvorrichtung gemäß einer ersten Konfiguration, Interferometriekonfiguration genannt, konfiguriert ist, um den Referenzarm und den Messarm mit der mindestens einen Lichtquelle (112, 212, 320, 520) zu beleuchten und um das abgegebene Licht des Messarms und des Referenzarms zu einem ersten optischen Sensor unter den optischen Sensoren (102, 202, 624) zu lenken, um ein Interferenzsignal auszubilden;

die Messvorrichtung gemäß einer zweiten Konfiguration, Bildgebungskonfiguration genannt, konfiguriert ist, um mindestens den Messarm zu beleuchten und um das abgegebene Licht des Messarms nur zu einem optischen Sensor unter den optischen Sensoren (102, 202, 624) zu lenken, um ein Bild der zu messenden Oberfläche auszubilden;

wobei die Messvorrichtung ferner umfasst:

Mittel zum Bestimmen einer Position der zu messenden Oberfläche relativ zu einer konjugierten Objektebene des ersten optischen Sensors (102, 202, 624) aus einer Messung der Oberfläche gemäß der Bildgebungskonfiguration,

digitale Verarbeitungsmittel, die konfiguriert sind, um die Position der zu messenden Oberfläche zu verwenden, um die Auswirkungen der Ausbreitung des Lichts zwischen der konjugierten Ebene des ersten optischen Sensors und der Oberfläche zu korrigieren, um aus dem Interferenzsignal eine Information über die zu messende Oberfläche zu erzeugen.

2. Vorrichtung nach Anspruch 1, wobei die Vorrichtung ferner Mittel zum Umschalten zwischen der Bildgebungskonfiguration und der Interferometriekonfiguration umfasst.

3. Vorrichtung nach Anspruch 2, **dadurch gekennzeichnet, dass** die Umschaltmittel ein Blockierelement (113, 213) zum Blockieren des Lichts des Referenzarms der interferometrischen Vorrichtung umfassen.

4. Vorrichtung nach einem der vorstehenden Ansprüche, **dadurch gekennzeichnet, dass** sie eine erste Lichtquelle (112, 212) umfasst, die angeordnet ist, um den Messarm und den Referenzarm der interferometrischen Vorrichtung zu beleuchten.

5. Vorrichtung nach dem vorstehenden Anspruch, **dadurch gekennzeichnet, dass** sie eine zweite Lichtquelle (320, 520) umfasst, die angeordnet ist, um nur den Messarm der interferometrischen Vorrichtung zu beleuchten.

6. Vorrichtung nach dem vorstehenden Anspruch, **dadurch gekennzeichnet, dass** die Spektral- und/oder Polarisationseigenschaften des durch die erste und die zweite Lichtquelle (112, 212, 320, 520) emittierten Lichts unterschiedlich sind.

7. Vorrichtung nach dem vorstehenden Anspruch, **dadurch gekennzeichnet, dass** sie zwei optische Sensoren (102, 202, 624) umfasst, wobei der erste konfiguriert ist, um das Licht von der ersten Lichtquelle (112, 212) zu erfassen, und der zweite konfiguriert ist, um das Licht von der zweiten Lichtquelle (320, 520) zu erfassen.

8. Vorrichtung nach einem der vorstehenden Ansprüche, **dadurch gekennzeichnet, dass** der mindestens eine optische Sensor (102, 202, 624) einen Monochrom- oder Farbmatrixsensor umfasst.

9. Vorrichtung nach einem der vorstehenden Ansprüche, **dadurch gekennzeichnet, dass** sie ferner Positionierungsmittel umfasst, die konfiguriert sind, um eine konjugierte Objektebene des mindestens einen optischen Sensors (102, 202, 624) an der zu messenden Oberfläche zu positionieren.

**10.** Vorrichtung nach einem der vorstehenden Ansprüche,
**dadurch gekennzeichnet, dass** die interferometrische Vorrichtung ein Michelson-Interferometer umfasst.

**11.** Vorrichtung nach einem der vorstehenden Ansprüche,
**dadurch gekennzeichnet, dass** die interferometrische Vorrichtung ein Mach-Zehnder-Interferometer umfasst.

**12.** Verfahren (10) zum Messen einer Oberfläche eines Objekts (100), wobei das Verfahren (10) durch eine Messvorrichtung (1000, 2000, 3000, 4000, 5000, 6000) durchgeführt wird, umfassend:

   - mindestens eine Lichtquelle (112, 212, 320, 520);
   - einen optischen Sensor oder eine Vielzahl von optischen Sensoren (102, 202, 624);
   - eine interferometrische Vorrichtung, die einen Messarm und einen Referenzarm aufweist, wobei der Messarm konfiguriert ist, um das Licht, das von der mindestens einen Lichtquelle (112, 212, 320, 520) abgegeben wird, auf die zu messende Oberfläche des Objekts mittels einer Fokussieroptik (107, 207) zu lenken und um das abgegebene Licht von der zu messenden Oberfläche zu dem optischen Sensor oder den optischen Sensoren (102, 202, 624) zu lenken;

   wobei das Verfahren die folgenden Schritte umfasst:

   - Messen (12) der Oberfläche gemäß einer ersten Konfiguration der Vorrichtung, Interferometriekonfiguration genannt, durch Beleuchtung des Referenzarms und des Messarms mit der mindestens einen Lichtquelle (112, 212, 320, 520) und Erfassung, durch einen ersten optischen Sensor unter den optischen Sensoren (102, 202, 624), des abgegebenen Lichts des Messarms und des Referenzarms, um ein Interferenzsignal zu erzeugen;
   - Messen (14) der Oberfläche gemäß einer zweiten Konfiguration der Vorrichtung, Bildgebungskonfiguration genannt, durch Beleuchtung mindestens des Messarms und Erfassung des abgegebenen Lichts durch einen optischen Sensor unter den optischen Sensoren (102, 202, 624) nur von dem Messarm, um ein Bild der zu messenden Oberfläche auszubilden; und
   - Bestimmen einer Position der zu messenden Oberfläche relativ zu einer konjugierten Objektebene des ersten optischen Sensors (102, 202, 624) aus einer Messung der Oberfläche gemäß der Bildgebungskonfiguration;
   wobei das Verfahren **dadurch gekennzeichnet ist, dass** es ferner den folgenden Schritt umfasst:

      - Verarbeiten (16, 17, 18) der Position der zu messenden Oberfläche, um die Auswirkungen der Lichtausbreitung zwischen der konjugierten Ebene des ersten optischen Sensors und der Oberfläche und des Interferenzsignals durch digitale Verarbeitungsmittel zu korrigieren, um eine Information über die zu messende Oberfläche zu erhalten.

**13.** Verfahren nach Anspruch 12, **dadurch gekennzeichnet, dass** die Verarbeitung (17) des Interferenzsignals durch eine profilometrische Analyse einer Vielzahl von Interferogrammen erfolgt, die für eine gleiche zu messende Oberfläche erlangt werden.

**14.** Verfahren nach dem vorstehenden Anspruch,
**dadurch gekennzeichnet, dass** die Vielzahl von Interferogrammen gemäß einem interferometrischen Phasenverschiebungsverfahren oder gemäß einem interferometrischen Vertikalabtastungsverfahren erlangt werden.

**15.** Verfahren nach Anspruch 12, **dadurch gekennzeichnet, dass** die Verarbeitung (17) des Interferenzsignals ein digitales Holographie-Berechnungsverfahren durchführt.

**16.** Verfahren nach einem der Ansprüche 12 bis 15,
**dadurch gekennzeichnet, dass** es einen Schritt (19) zum Erhalten einer Information über die zu messende Oberfläche umfasst, wobei eine Intensitätsinformation in Graustufen und/oder in Farbe, die in der Bildgebungskonfiguration erhalten wird, und eine Form- und/oder Profilinformation, die in der Interferometriekonfiguration erhalten wird, kombiniert werden.

**17.** Verfahren nach einem der Ansprüche 12 bis 15,
**dadurch gekennzeichnet, dass** es einen Schritt (19) zum Erhalten einer Informationen über die Verschiebung oder Vibration der zu messenden Oberfläche umfasst, umfassend das Erhalten von Informationen über die Verschiebung oder Vibration in der Ebene dieser Oberfläche aus Bildern in der Bildgebungskonfiguration und das Erhalten einer Information über die Verschiebung oder Vibration aus der Ebene dieser Oberfläche aus Interferenzsignalen in der Interferometriekonfiguration.

**Claims**

1. Device (1000, 2000, 3000, 4000, 5000, 6000) for measuring a surface of an object (100), the device comprising:

   - at least one light source (112, 212, 320, 520);
   - an optical sensor or a plurality of optical sensors (102, 202, 624); and
   - an interferometric device having a measurement arm and a reference arm, the measurement arm being configured to direct the light coming from the at least one light source (112, 212, 320, 520) towards the surface to be measured of the object via a focusing optical system (107, 207) and to direct the light coming from the surface to be measured towards the optical sensor or the optical sensors (102, 202, 624);
   the measurement device being configured, in a first configuration called interferometry configuration, to illuminate the reference arm and the measurement arm with the at least one light source (112, 212, 320, 520) and to direct the light coming from the measurement arm and from the reference arm towards a first optical sensor out of the optical sensors (102, 202, 624), so as to form an interference signal;
   the measurement device being configured, in a second configuration called imaging configuration, to illuminate at least the measurement arm and to direct the light coming from the measurement arm only towards an optical sensor out of the optical sensors (102, 202, 624), so as to form an image of the surface to be measured;
   the measurement device also comprising:

      means for determining a position of the surface to be measured relatively to a conjugate object plane of the first optical sensor (102, 202, 624) based on a measurement of the surface in the imaging configuration, digital processing means configured to use the position of the surface to be measured for correcting for propagation effects of the light between the conjugate plane of the first optical sensor and the surface to produce, from the interference signal, an item of information on the surface to be measured.

2. Device according to claim 1, the device also comprising means for toggling between the imaging configuration and the interferometry configuration.

3. Device according to claim 2, **characterized in that** the toggle means comprise a blocking element (113, 213) for blocking the light from the reference arm of the interferometric device.

4. Device according to any one of the preceding claims, **characterized in that** it comprises a first light source (112, 212) arranged for illuminating the measurement arm and the reference arm of the interferometric device.

5. Device according to the preceding claim, **characterized in that** it comprises a second light source (320, 520) arranged for illuminating only the measurement arm of the interferometric device.

6. Device according to the preceding claim, **characterized in that** the spectral and/or polarization properties of the light emitted respectively by the first and the second light source (112, 212, 320, 520) are different.

7. Device according to the preceding claim, **characterized in that** it comprises two optical sensors (102, 202, 624), the first being configured to detect the light from the first light source (112, 212), and the second being configured to detect the light from the second light source (320, 520).

8. Device according to any one of the preceding claims, **characterized in that** the at least one optical sensor (102, 202, 624) comprises a monochrome or colour matrix sensor.

9. Device according to any one of the preceding claims, **characterized in that** it also comprises positioning means configured for relative positioning of a conjugate object plane of the at least one optical sensor (102, 202, 624) at the level of the surface to be measured.

10. Device according to any one of the preceding claims, **characterized in that** the interferometric device comprises a Michelson interferometer.

11. Device according to any one of the preceding claims, **characterized in that** the interferometric device comprises a Mach-Zehnder interferometer.

12. Method (10) for measuring a surface of an object (100), the method (10) being implemented by a measurement device (1000, 2000, 3000, 4000, 5000, 6000) comprising:

- at least one light source (112, 212, 320, 520);
- an optical sensor or a plurality of optical sensors (102, 202, 624);
- an interferometric device having a measurement arm and a reference arm, the measurement arm being configured to direct the light coming from the at least one light source (112, 212, 320, 520) towards the surface to be measured of the object via a focusing optical system (107, 207) and to direct the light coming from the surface to be measured towards the optical sensor or the optical sensors (102, 202, 624);

the method comprising the following steps:

- measuring (12) the surface in a first configuration of the device, called interferometry configuration, by lighting the reference arm and the measurement arm with the at least one light source (112, 212, 320, 520) and detecting, by a first optical sensor out of the optical sensors (102, 202, 624), the light coming from the measurement arm and from the reference arm, so as to produce an interference signal;
- measuring (14) the surface in a second configuration of the device, called imaging configuration, by lighting at least the measurement arm and detecting, by an optical sensor out of the optical sensors (102, 202, 624), the light originating only from the measurement arm, so as to form an image of the surface to be measured; and
- determining a position of the surface to be measured relatively to a conjugate object plane of the first optical sensor (102, 202, 624) based on a measurement of the surface in the imaging configuration;
the method being **characterized in that** it further comprises the following step:

- processing (16, 17, 18) the position of the surface to be measured for correcting for propagation effects of the light between the conjugate plane of the first optical sensor and the surface, and the interference signal by digital processing means, so as to obtain an item of information on the surface to be measured.

13. Method according to claim 12, **characterized in that** the processing (17) of the interference signal is carried out by an analysis using profilometry of a plurality of interferograms acquired for one and the same surface to be measured.

14. Method according to the preceding claim, **characterized in that** the plurality of interferograms is acquired according to a phase-shifting interferometric method or according to a vertical scanning interferometric method.

15. Method according to any one of claims 12, **characterized in that** the processing (17) of the interference signal implements a calculation method using digital holography.

16. Method according to any one of claims 12 to 15, **characterized in that** it comprises a step (19) of obtaining an item of information on the surface to be measured, combining an item of greyscale and/or colour intensity information obtained in imaging configuration and an item of shape and/or profile information obtained in interferometry configuration.

17. Method according to any one of claims 12 to 15, **characterized in that** it comprises a step (19) of obtaining an item of information of displacement or of vibration of the surface to be measured, comprising obtaining an item of information of in-plane displacement or of vibration of this surface based on images in imaging configuration, and obtaining an item of information of out-of-plane displacement or vibration of this surface based on interference signals in interferometry configuration.

Fig. 1

Fig. 2

Fig. 3

Fig. 4

Fig. 5

Fig. 6

10

12

14

Mesure de la surface en configuration d'interférométrie

Mesure de la surface en configuration d'imagerie

17

16

18

Traitement interférométrie

détermination de la forme apparente de l'interface

17b

17a

détermination de la forme réelle de l'interface

Traitement imagerie

Exploitation combinée des résultats de traitement

19

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140226150 A
- US 9719777 B1
- EP 1705456 A1

**Littérature non-brevet citée dans la description**

- *Appl. Opt.,* 1999, vol. 38, 6994-7001
- *Opt. Express,* 2005, vol. 13, 9935-9940
- *Meas. Sci. Technol.,* 2002, vol. 13, R85-R101